(19) Europäisches Patentamt

European Patent Office

Office européen des brevets

(11) Veröffentlichungsnummer: **0 363 522 B1**

(12) **EUROPÄISCHE PATENTSCHRIFT**

(45) Veröffentlichungstag der Patentschrift: **30.12.92**

(51) Int. Cl.⁵: **G01T 1/29**

(21) Anmeldenummer: **88117155.7**

(22) Anmeldetag: **14.10.88**

(54) **Röntgendiagnostikeinrichtung mit einem Speicherleuchtschirm.**

(43) Veröffentlichungstag der Anmeldung:
**18.04.90 Patentblatt 90/16**

(45) Bekanntmachung des Hinweises auf die
Patenterteilung:
**30.12.92 Patentblatt 92/53**

(84) Benannte Vertragsstaaten:
**BE DE FR IT**

(56) Entgegenhaltungen:
**EP-A- 0 209 119**
**EP-A- 0 210 505**
**DE-A- 3 603 928**

(73) Patentinhaber: **SIEMENS AKTIENGESELL-
SCHAFT
Wittelsbacherplatz 2
W-8000 München 2(DE)**

(72) Erfinder: **Lange, Gottfried, Dipl.-Phys.
Dresdenerstrasse 38a
W-8520 Erlangen(DE)**
Erfinder: **Reinfelder, Hans-Erich, Dr.-Ing.
Marktplatz 4
W-8520 Erlangen(DE)**
Erfinder: **Tressl, Günther
Dompfaffstrasse 12
W-8521 Bubenreuth(DE)**

## Beschreibung

Die Erfindung betrifft eine Röntgendiagnostikeinrichtung gemäß dem Oberbegriff des Patentanspruches 1. Derartige Auslesevorrichtungen dienen zur Anregung des im Speicherleuchtschirm enthaltenen latenten Speicherleuchtstoffbildes, das Licht emittiert, dessen Helligkeit von der vorhergehenden Belichtung durch Röntgenstrahlen abhängt.

In der US-A-4,629,890 ist eine derartige Auslesevorrichtung beschrieben, bei der über dem Speicherleuchtschirm ein rohrförmiger Lichtleiter angeordnet ist, dessen Innenwände verspiegelt sind. Der rohrförmige Lichtleiter weist dabei einen schlitzförmigen Durchlaß auf, durch den der Abtaststrahl, der von einer Strahlenquelle erzeugt und durch einen drehbaren Spiegel abgelenkt wird, hindurchtreten kann, so daß eine vollständige Zeile des Speicherleuchtschirmes abgetastet und angeregt werden kann.

Der Speicherleuchtschirm emittiert dabei auf Grund der Anregung bildpunktweise Licht, das von den Wänden des rohrförmigen Lichtleiters reflektiert und auf zwei an den Seiten angeordneten Detektoren geleitet wird. Diese erzeugen ein elektrisches Signal, das der Helligkeit des von dem Bildpunkt des Speicherleuchtschirmes emittierten Lichtes entspricht.

Bei einem derartigen Lichtleiter darf der Rohrdurchmesser nicht zu klein sein, sonst treten zu viele Reflexionen auf, die das Licht zu stark schwächen. Das Licht, das auf den Endflächen auftrifft, muß mit gutem Wirkungsgrad umgewandelt werden. Photomultiplier mit seitlichen Fenstern haben Auflichtkathoden, d.h. das Kathodenblech ist in einiger Entfernung hinter dem Fenster angeordnet, damit die nach vorne emittierenden Elektronen abgesaugt werden können. Damit der größte Teil des aus dem rohrförmigen Lichtleiter austretenden Lichtes erfaßt wird, müssen Multiplier mit seitlichen Fenstern mit ihren Abmessungen wesentlich größer sein als der optimale Rohrdurchmesser. Derartige Photomultiplier mit seitlichem Fenster mit großen Abmessungen gibt es nicht.

Photomultiplier mit Durchlichtkathoden brauchen nur einen Durchmesser von der Größe des Durchmessers des Rohres aufzuweisen, da die Photokathode sich bei ihnen fast an den Rohrenden befindet. Dieses wiederum bedingt eine sehr sperrige Bauweise, weil die Photomultiplier in der Rohrachse angeflanscht sind. Durch die seitliche Anordnung der Detektoren ergibt sich ein Empfindlichkeitsverlauf, der die seitlichen Bereiche des Speicherleuchtschirmes bevorzugt, da diese direkter, d.h. mit weniger Reflektionen, auf den Detektor auftreffen. Die wichtigsten Bildinformationen liegen aber meistens in der Bildmitte, so daß diese gegenüber den Randbereichen geschwächt erscheinen.

Der EP-A-0 209 119 ist ein Bildauslesegerät zu entnehmen, bei dem ein zeilenförmiger Detektor in einer Öffnung der Wandung eines rohrförmigen Lichtleiters eingreift, bzw. vor einem Lichtleiter mit einer dem Detektor und der Speicherleuchtschirm zugewandten Öffnung zugeordnet ist. Die Öffnungen der Lichtleiter sind dabei parallel zur Fläche des Leuchtschirmes ausgerichtet. Seitlich sind die Lichtleiter nicht durch reflektierende Flächen abgeschlossen, so daß Verlustlicht austreten kann. Durch den Einbau des Detektors in den rohrförmigen Lichtleiter ergibt sich für diesen eine schwierige Herstellung und Montage. Bei der zweiten Ausführungsform mit einer Viertelschale, bei der der Detektor schräg angeordnet ist, geht einesteils ein nicht zu vernachlässigender Anteil des emittierten Lichtes verloren und anderenseits wird auch Licht erfaßt, das nicht zu dem abgetasteten Bildpunkt bzw. der Abtastzeile gehört, so daß die Auflösung reduziert wird.

In der EP-A-0 210 505 ist eine Auslesevorrichtung für einen Speicherleuchtschirm beschrieben, bei der das von dem Speicherleuchtschirm emittierte Licht über einen Lichtleiter auf einen Detektor geführt wird. Vor dem Lichtleiter ist ein elliptischer Spiegel, der ebenfalls einer Viertelschale entspricht, angeordnet, in dessen einen Fokus die Abtastzeile und dessen anderen Fokus die Eingangsfläche des Lichtleiters sich befindet. Bei der derartigen Ausführung sind also zwei getrennte Lichtleiter erforderlich. Auch hier gibt es durch das Fehlen der seitlichen Verspiegelung sowie der Fehlanpassung der Fläche des Lichtleiters zu der dem Detektor zugeordneten Seite der Viertelschale des Spiegels Verluste.

Die Erfindung geht von der Aufgabe aus, eine Röntgendiagnostikeinrichtung der eingangs genannten Art zu schaffen, bei der die Ausleseeinheit einen kompakten und einfachen Aufbau aufweist und eine sichere Auslesung insbesondere der bildwichtigen Teile in der Mitte des Speicherleuchtschirmes bewirkt. Weiterhin sollten sich geringe Reflexionswege des emittierten Lichtes ergeben.

Die Aufgabe wird erfindungsgemäß durch die im kennzeichnenden Teil des Patentanspruches 1 angegebenen Merkmale gelöst. Dadurch erhält man einen kompakten Aufbau der Ausleseeinheit, da der Detektor an dem rohrförmigen Lichtleiter senkrecht zur Rohrachse und Zeilenrichtung angebracht ist. Durch die Integration des Detektors mit dem rohrförmigen Lichtleiter und die vorzugsweise Anordnung des Detektors nahe der Mitte desselben benötigt das zumindest von den in der Mitte liegenden Bildpunkten emittierte Licht nur wenig Reflexionen, so daß es nahezu ungeschwächt auf die lichtempfindliche Eingangsfläche des Detektors gelangt. Weiterhin ist der Detektor nahe der Abtastzeile angeordnet, so daß sich auch hieraus geringe Reflexionswege des emittierten Lichtes ergeben.

Die Lichtausbeute sowie die Linearität der Helligkeit läßt sich erhöhen, wenn zwei Detektoren nebeneinander angeordnet sind. Eine sichere Befestigung der Detektoren sowie eine stabile Anordnung der Auslesevorrichtung bei gleichzeitiger hoher Lichtführung wird erreicht, wenn die noch verbleibende freie Fläche der Halbschale durch eine verspiegelte Halterung für die Detektoren abgedeckt ist und wenn zwischen Halbschale und der Halterung der Detektoren der Laserstrahl durchgeführt ist. Das von der Oberfläche des Speicherleuchtschirms reflektierte Licht des Laserstrahles läßt sich eliminieren, wenn vor den Detektoren ein Filter angeordnet ist. Es hat sich als vorteilhaft erwiesen, wenn der rohrförmige Lichtleiter einen runden oder elliptischen Querschnitt aufweist. Die Anzahl der Reflexionen läßt sich klein halten, wenn der Durchmesser des rohrförmigen Lichtleiters 100 - 120 mm beträgt. Eine hochwertige Verspiegelung mit nahezu 100 %-iger Reflexion er-hält man, wenn die verspiegelten Flächen des rohrförmigen Lichtleiters aus Bariumsulfat (BaSO$_4$) bestehen. Eine Korrektur des Helligkeitsverlaufes in Zeilenrichtung kann erfolgen, wenn das Bildwiedergabesystem derart ausgebildet ist, daß jede Abtastzeile entsprechend der örtlich verschiedenen optischen Ankopplungsgüte in Zeilenrichtung korrigiert wird.

Die Erfindung ist nachfolgend anhand eines in der Zeichnung dargestellten Rusführungsbeispieles näher erläutert. Es zeigen:

FIG 1    den Aufnahmeteil einer bekannten Röntgendiagnostikeinrichtung,

FIG 2    den Wiedergabeteil einer bekannten Röntgendiagnostikein richtung,

FIG 3    eine Draufsicht auf die erfindungsgemäße Auslesevorichtung und

FIG 4    einen Schnitt entlang der Linie IV-IV der in FIG 3 dargestellten Auslesevorrichtung.

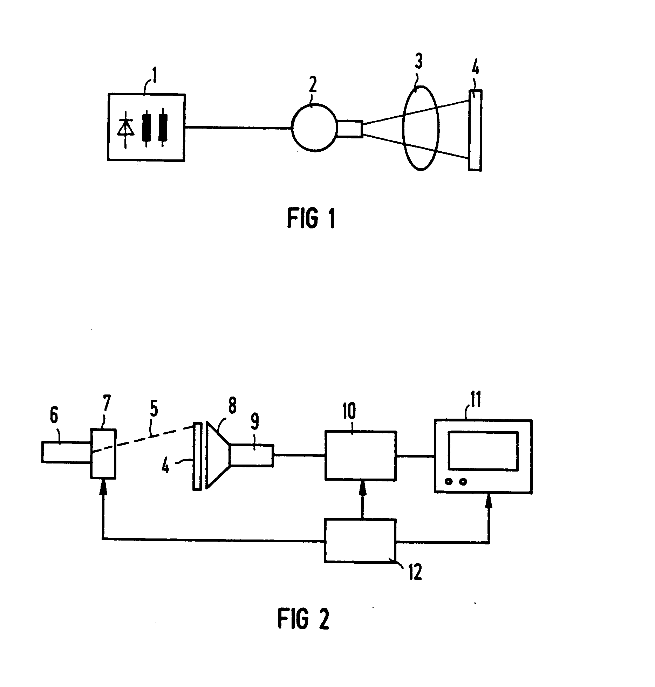

In der FIG 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4 Defektelektronen, die in Potentialfallen des Leuchtstoffes gehalten werden, so daß in dem Speicherleuchtschirm ein latentes Bild gespeichert ist.

Zur Wiedergabe des latenten Bildes wird der Speicherleuchtschirm 4, wie in FIG 2 dargestellt, von einem Laserstrahl 5 bildpunktweise abgetastet, der von einem Laser 6 erzeugt wird und von einer Ablenkungsvorrichtung 7 über die Fläche des Leuchtschirmes 4 zeilenweise abgelenkt wird. Die Ablenkungsvorrichtung 7 für den Laser 6 kann beispielsweise aus einem Ablenkspiegel für die vertikale und einem elektrooptischen Strahlenablenker für die horizontale Ablenkung bestehen. Die vertikale Ablenkung kann aber auch durch einen Parallel-Vorschub des Leuchtschirmes 4 senkrecht zur Abtastzeile erreicht werden, wie dies für die erfindungsgemäße Auslesevorrichtung benötigt wird.

Durch die Abtastung mit dem Laserstrahl 5 werden alle auf dem Speicherleuchtschirm 4 liegenden Bildpunkte zeilenweise nacheinander angeregt und zum Leuchten gebracht. Eine Lichtleiteroptik 8 erfaßt das vom Speicherleuchtschirm 4 emittierte Licht und leitet es auf eine Detektorvorrichtung 9, die die Helligkeit der abgetasteten Bildpunkte erfaßt und in ein elektrisches Signal umwandelt. Dieses Signal wird einer Wiedergabeschaltung 10 zugeführt, die aus den einzelnen analogen Ausgangssignalen der Detektorvorrichtung 9 ein Videosignal zur Darstellung auf einem Monitor 11 erzeugt. Die Wiedergabeschaltung 10 kann Bildspeicher, Bearbeitungsschaltungen, A/D- und D/A-Wandler enthalten. Eine Steuereinrichtung 12 erzeugt die Steuertakte zur Synchronisation der Ablenkvorrichtung 7, der Wiedergabeschaltung 10 und des Monitors 11.

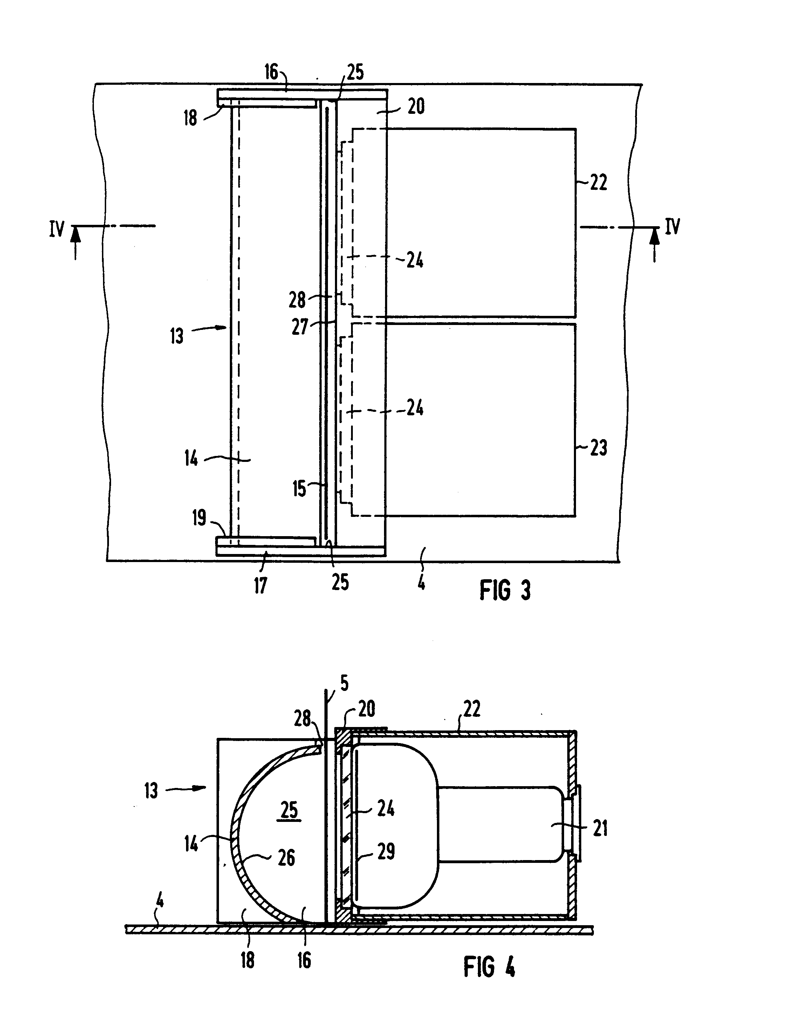

In der FIG 3 ist der erfindungsgemäße Aufbau der Lichtleiteroptik 8 und der Detektorvorrichtung 9 dargestellt. Die Lichtleiteroptik 8 besteht aus einem rohrförmigen Lichtleiter 13, der eine Halbschale 14 mit kreisförmigen Durchmesser aufweist. Die Öffnung der Halbschale 14 steht dabei nahezu senkrecht auf dem Speicherleuchtschirm 4 und verläuft parallel zur Ausrichtung der Abtastzeile 15, die der Laserstrahl 5 auf dem Speicherleuchtschirm 4 überstreicht. Die Halbschale 14 wird seitlich von zwei Platten 16 und 17 begrenzt, an denen Befestigungsplatten 18 und 19 für die Halbschale 14 angebracht sind. Der Halbschale 14 gegenüber ist an den Platten 16 und 17 eine Halterung 20 befestigt, die, wie aus FIG 4 ersichtlich, Öffnungen für zwei Detektoren 21 aufweisen. Die Detektoren 21 sind von Abschirmungen 22 und 23 umgeben. Vor den Detektoren 21 sind Filter 24 angeordnet. Als Detektoren 21 können dabei Photomultiplier mit Durchlichtkathoden Verwendung finden.

Zur guten Lichtführung sind die Flächen 25 der Platten 16 und 17, die Innenfläche 26 der Halbschale 14 sowie die Fläche 27 der Halterung 20 verspiegelt. Dies kann erfindungsgemäß durch Bariumsulfat (BaSO$_4$) erfolgen, das einen Reflexionsgrad von nahezu 100 % aufweist.

Durch den schmalen, schlitzförmigen Durchlaß 28 zwischen Halterung 20 und Halbschale 14 fällt der Laserstrahl 5, der, wie bereits beschrieben, quer zum Speicherleuchtschirm 4 abgelenkt wird. Dadurch überstreicht der Laserstrahl 5 den Speicherleuchtschirm 4 in Form der Abtastzeile 15, so daß die auf dieser Abtastzeile 15 liegenden Bildpunkte des Speicherleuchtschirmes 4 nacheinander zum Leuchten angeregt werden. Das von den angeregten Bildpunkten emittierte Licht breitet sich nach allen Seiten aus und wird von den verspiegelten Flächen 25 bis 27 so lange reflektiert, bis es auf die lichtempfindlichen Flächen der Photokathoden 29 der Detektoren 21 fällt, so daß dieses Licht zum elektrischen Signal beitragen kann.

Die Bildpunkte, die in der Nähe der Detektoren 21 liegen, benötigen nur einen kurzen Weg und wenige Reflektionen, bis sie auf die Photokathode 29 des naheliegenden Detektors fallen. Dadurch gelangt dieser Lichtanteil nahezu ungeschwächt auf die Photokathode 29. Die Bildpunkte, die zwischen den beiden Detektoren 21 liegen, senden Licht aus, das zwar einen etwas längeren Weg benötigt, dafür aber auf beide Detektoren 21 fallen kann, so daß auch dieses Licht nahezu ungeschwächt von den Detektoren 21 erfaßt wird. Lediglich die Anteile der Bildpunkte, die seitlich der Detektoren 21 liegen, liefern ein etwas abgeschwächtes Signal. Da aber in diesen Bereichen meistenteils nur nicht relevante Bildteile liegen, wird dies nicht als störend empfunden. Es besteht aber auch die Möglichkeit, die seitlichen Abfälle der Lichtintensitäten des Speicherleuchtbildes infolge veränderter Lichtübertragungswege von Zeile zu Zeile in einem in der Wiedergabeschaltung 10 angeordneten Rechner zu korrigieren.

Anstelle von zwei Detektoren 21 läßt sich auch erfindungsgemäß nur einer verwenden, der in der Mitte der Halterung 20 angeordnet ist. Dadurch liegt zwar das Empfindlichkeitsmaximum der Auslesevorrichtung im mittleren Bereich, der, wie bereits erwähnt, aber die wesentlichen Bildinformationen enthält. Einem Empfindlichkeitsabfall am Rande des Bildes wird durch eine entsprechende Korrektur in der Wiedergabeschaltung begegnet, indem die örtlich verschiedenen optischen Ankopplungsgüten des Speicherleuchtschirmes an den Detektor in Zeilenbreite prozentual in jeder Abtastzeile als Korrekturwerte eingerechnet werden. Das Ergebnis ist dann ein über die ganze Abtastbreite von z.B. 40 cm homogen aussehendes Speicherleuchtstoffbild, das nur noch die Modulation der durch die Röntgenstrahlung aufbelichteten Strahlungsbilder und sonst keine Störungen enthält. So können dann auch bei z.B. Thorax-Aufnahmen in Thoraxwandbereichen, die am Bildrand der Speicherfolie liegen würden, gut diagnostiziert werden.

**Patentansprüche**

1. Röntgendiagnostikeinrichtung mit einem Speicherleuchtschirm (4) für die latente Speicherung des jeweiligen Röntgenstrahlenbildes, mit einer Auslesevorrichtung (5 bis 12), bei der zur Bildwiedergabe der Speicherleuchtschirm (4) durch eine flächenförmige Abtastung mittels eines Abtaststrahles (5) einer Strahlenquelle (6) bildpunktweise zum Leuchten angeregt wird, mit einer Detektorvorrichtung (8, 9) zum flächenförmigen Erfassen des von dem Speicherleuchtschirm (4) emittierten Lichtes und mit einem Bildwiedergabesystem (10, 11), wobei die Detektorvorrichtung (8, 9) einen rohrförmigen, verspiegelten Lichtleiter (8, 13) zum Erfassen einer abgetasteten, vollständigen Zeile (15) auf dem Speicherleuchtschirm (4) und wenigstens einen Detektor (21) aufweist und der Lichtleiter (8, 13) mit einem schlitzförmigen Durchlaß (28) für den Abtaststrahl (5) versehen ist, wobei in der Wandung des rohrförmigen Lichtleiters (8, 13) eine Öffnung zur Aufnahme des Detektors (21) vorgesehen ist, der Detektor (21) derart ausgerichtet ist, daß seine lichtempfindliche Fläche parallel zur abgetasteten Zeile (15) verläuft, und der rohrförmige Lichtleiter (8, 13) eine Halbschale (14) aufweist, deren Öffnung etwa senkrecht auf der Ebene für den Speicherleuchtschirm (4) und parallel zur abzutastenden Zeilenrichtung liegt, **dadurch gekennzeichnet,** daß der Detektor (21) derart gegenüber der Öffnung der Halbschale (14) angeordnet ist, daß seine lichtempfindliche Fläche parallel zur Fläche der Öffnung liegt, wobei die senkrechten Abmessungen beider Flächen nahezu gleich sind, und daß der Durchlaß (28) zwischen Halbschale (14) und Detektor (21) angeordnet ist, und daß der rohrförmige Lichtleiter (8, 13) an seinen seitlichen Enden durch Platten (16, 17) mit verspiegelten Flächen (25) abgeschlossen ist.

2. Röntgendiagnostikeinrichtung nach Anspruch 1, **dadurch gekennzeichnet,** daß zwei Detektoren (21) nebeneinander angeordnet sind.

3. Röntgendiagnostikeinrichtung nach Anspruch 1 oder 2, **dadurch gekennzeichnet,** daß die noch verbleibende freie Fläche der Öffnung der Halbschale (14) durch eine verspiegelte Halterung (20) für die Detektoren (21) abgedeckt ist und daß zwischen Halbschale (14) und der Halterung (20) der Laserstrahl (5) durchgeführt ist.

4. Röntgendiagnostikeinrichtung nach einem der Ansprüche 1 bis 3, **dadurch gekennzeichnet,** daß vor den Detektoren (21) ein Filter (24) angeordnet ist.

5. Röntgendiagnostikeinrichtung nach einem der Ansprüche 1 bis 4, **dadurch gekennzeichnet,** daß der rohrförmige Lichtleiter (8, 13) einen runden Querschnitt aufweist.

6. Röntgendiagnostikeinrichtung nach einem der Ansprüche 1 bis 5, **dadurch gekennzeichnet,** daß der rohrförmige Lichtleiter (8, 13) einen elliptischen Querschnitt aufweist.

7. Röntgendiagnostikeinrichtung nach einem der Ansprüche 1 bis 6, **dadurch gekennzeichnet,** daß der Durchmesser des rohrförmigen Lichtleiters (8, 13) 100 - 120 mm beträgt.

8. Röntgendiagnostikeinrichtung nach einem der Ansprüche 1 bis 7, **dadurch gekennzeichnet,** daß die verspiegelten Flächen des rohrförmigen Lichtleiters (8, 13) aus Barium-Sulfat ($BaSO_4$) bestehen.

9. Röntgendiagnostikeinrichtung nach einem der Ansprüche 1 bis 8, **dadurch gekennzeichnet,** daß das Bildwiedergabesystem (10, 11) derart ausgebildet ist, daß jede Abtastzeile entsprechend der örtlich verschiedenen optischen Ankopplungsgüte in Zeilenrichtung korrigiert wird.

## Claims

1. X-ray diagnostic device having a luminescent storage screen (4) for the latent storage of the respective X-ray image, having a read-out arrangement (5 to 12) in which for the purpose of reproducing the image of the luminescent storage screen (4) luminescence is stimulated by uniplanar scanning by means of a scanning ray (5) of a ray source (6) pixel by pixel, having a detector arrangement (8, 9) for the uniplanar detection of the light emitted from the luminescent storage screen (4) and having an image-reproducing system (10, 11), with the detector arrangement (8, 9) having a tubular mirrored light guide (8, 13) for the purpose of detecting a scanned complete line (15) on the luminescent storage screen (4) and at least one detector (21), and the light guide (8, 13) being provided with a slot-shaped passage (28) for the scanning ray (5), there being provided in the wall of the tubular light guide (8, 13) an opening for receiving the detector (21), the detector (21) being aligned such that its light-sensitive surface runs parallel to the scanned line (15) and the tubular light guide (8, 13) having a half-shell (14), the opening of which lies so as to be substantially perpendicular to the plane for the luminescent storage screen (4) and parallel to the line direction to be scanned, characterised in that the detector (21) is arranged in relation to the opening of the half-shell (14) in such a way that its light-sensitive surface lies parallel to the surface of the opening, in which case the perpendicular dimensions of both surfaces are almost the same, and in that the passage (28) is arranged between half-shell (14) and detector (21) and in that the tubular light-guide (8, 13) is closed off at its lateral ends by means of plates (16, 17) with mirrored surfaces (25).

2. X-ray diagnostic device according to claim 1, characterised in that two detectors (21) are arranged side by side.

3. X-ray diagnostic device according to claim 1 or 2, characterised in that the area of the opening of the half-shell (14) still remaining free is covered by means of a mirrored holding support (20) for the detectors (21) and in that the laser beam (5) is guided through between half-shell (14) and the holding support (20).

4. X-ray diagnostic device according to one of the claims 1 to 3, characterised in that a filter (24) is arranged in front of the detectors (21).

5. X-ray diagnostic device according to one of the claims 1 to 4, characterised in that the tubular light-guide (8, 13) has a round cross-section.

6. X-ray diagnostic device according to one of the claims 1 to 5, characterised in that the tubular light guide (8, 13) has an elliptic cross-section.

7. X-ray diagnostic device according to one of the claims 1 to 6, characterised in that the diameter of the tubular light guide (8, 13) amounts to 100 - 120 mm.

8. X-ray diagnostic device according to one of the claims 1 to 7, characterised in that the mirrored surfaces of the tubular light guide (8, 13) consist of barium-sulphate ($BaSO_4$).

9. X-ray diagnostic device according to one of the claims 1 to 8, characterised in that the image-reproducing system (10, 11) is formed in such a way that each scanning line is corrected in accordance with the locally varying optical coupling quality in line direction.

## Revendications

1. Appareil de radiodiagnostic comportant un écran luminescent de stockage (4) servant à stocker à l'état latent l'image radiographique respective, comportant un dispositif de lecture (5 à 12), dans lequel, pour la reproduction de l'image, l'écran luminescent de stockage (4) est excité, pour s'éclairer, au niveau des points d'image, sous l'effet d'un balayage, d'une certaine étendue, réalisé au moyen d'un faisceau de balayage (5) d'une source de rayonnement (6), un dispositif de détection (8,9) servant à détecter, sur une certaine étendue, la lumière émise par l'écran luminescent de stockage (4), et un système de reproduction d'images (10,11), et dans laquelle le dispositif de détection (8,9) possède un guide de lumière tubulaire métallisé (8,13) servant à détecter une ligne complète balayée (15) sur l'écran luminescent de stockage (4), et au moins un détecteur (21), tandis que le guide de lumière (8,13) est pourvu d'un passage en forme de fente (28) pour le faisceau de balayage (5), et dans lequel une ouverture servant à recevoir le détecteur (21) est ménagée dans la paroi du guide de lumière tubulaire (8,13), le détecteur (21) est agencé de telle sorte que sa surface photosensible est parallèle à la ligne balayée (15) et le guide de lumière tubulaire (8,13) possède une demi-coque (14), dont l'ouverture est approximativement perpendiculaire au plan prévu pour l'écran luminescent de stockage (4) et est approximativement parallèle à la direction des lignes devant être explorées, caractérisé par le fait que le détecteur (21) est disposé par rapport à l'ouverture de la demi-coque (14) de telle sorte que sa surface photosensible est parallèle à la surface de l'ouverture, les dimensions perpendiculaires des deux surfaces étant presque identiques, et que le passage (28) est disposé entre la demi-coque (14) et le détecteur et que le guide de lumière tubulaire (8,13) est fermé, au niveau de ses extrémités latérales, par des plaques (16,17) possédant des surfaces métallisées (25).

2. Installation de radiodiagnostic suivant la revendication 1, caractérisée par le fait que deux détecteurs (21) sont disposés côte-à-côte.

3. Installation de radiodiagnostic suivant la revendication 1 ou 2, caractérisée par le fait que la surface libre, qui subsiste encore, de l'ouverture de la demi-coque (14) est fermée par un support métallisé (20) pour les détecteurs (21) et que le faisceau laser (5) est transmis entre la demi-coque (14) et le support (20).

4. Installation de radiodiagnostic suivant l'une des revendications 1 à 3, caractérisée par le fait qu'un filtre (24) est placé devant les détecteurs (21).

5. Installation de radiodiagnostic suivant l'une des revendications 1 à 4, caractérisée par le fait que le guidede lumière tubulaire (8,13) possède une section transversale circulaire.

6. Installation de radiodiagnostic suivant l'une des revendications 1 à 5, caractérisée par le fait que le guidede lumière tubulaire (8,13) possède une section transversale elliptique.

7. Installation de radiodiagnostic suivant l'une des revendications 1 a 6, caractérisée par le fait que le diamètre du guide de lumière tubulaire (8,13) est égal à 100-120 mm.

8. Installation de radiodiagnostic suivant l'une des revendications 1 à 7, caractérisée par le fait que les surfaces métallisées du guidede lumière tubulaire (8,13) sont constituées par du sulfate de baryum ($BaSO_4$).

9. Installation de radiodiagnostic suivant l'une des revendications 1 à 8, caractérisée par le fait que le système de reproduction d'images (10,11) est agencé de telle sorte que chaque ligne de balayage est corrigée dans la direction des lignes en fonction de la qualité de couplage optique, qui varie localement.

FIG 1

FIG 2

FIG 3

FIG 4